(19) Europäisches Patentamt
European Patent Office
Office européen des brevets

(11) Veröffentlichungsnummer: **0 458 240 A1**

(12) **EUROPÄISCHE PATENTANMELDUNG**

(21) Anmeldenummer: **91108135.4**

(51) Int. Cl.5: **C08G 73/12**, C08F 222/40

(22) Anmeldetag: **21.05.91**

(30) Priorität: **22.05.90 CH 1730/90**

(43) Veröffentlichungstag der Anmeldung:
**27.11.91 Patentblatt 91/48**

(84) Benannte Vertragsstaaten:
**DE ES FR GB IT NL SE**

(71) Anmelder: **CIBA-GEIGY AG**
**Klybeckstrasse 141**
**CH-4002 Basel(CH)**

(72) Erfinder: **Brunner, Rudolf, Dr.**
**Champ sur le Moulin K1**
**CH-1782 Belfaux(CH)**
Erfinder: **Huwyler, René, Dr.**
**Bärensweg 5**
**CH-4147 Aesch(CH)**
Erfinder: **Kramer, Andreas, Dr.**
**Bundtels**
**CH-3186 Düdingen(CH)**

(74) Vertreter: **Zumstein, Fritz, Dr. et al**
**Bräuhausstrasse 4**
**W-8000 München 2(DE)**

(54) **Neue härtbare Zusammensetzungen.**

(57) Zusammensetzungen enthaltend
A) Verbindungen der Formel I

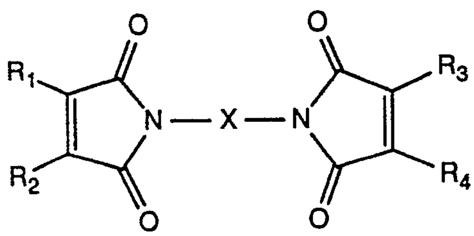

, (I)

worin $R_1$, $R_2$, $R_3$ und $R_4$ gleich oder verschieden sind und jeweils Wasserstoff oder Methyl bedeuten und X einen zweiwertigen organischen Rest mit 2 bis 60 C-Atomen darstellt,
B) Verbindungen der Formeln II, III oder IV

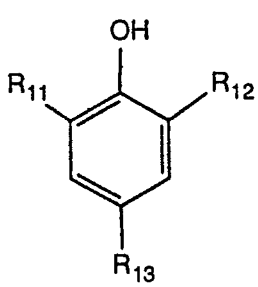

, (II)

worin $R_{11}$, $R_{12}$ und $R_{13}$ unabhängig voneinander ein Wasserstoffatom oder ein $C_3$-$C_{10}$-Alkenyl bedeuten,

EP 0 458 240 A1

wobei mindestens einer der Reste $R_{11}$ bis $R_{13}$ für eine Alkenylgruppe steht,

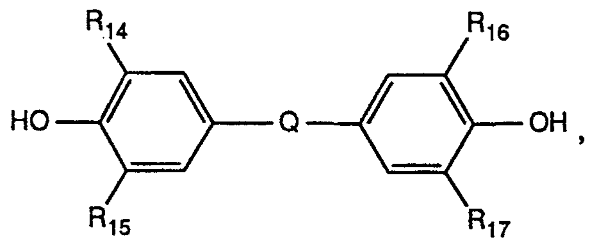

(III)

worin Q eine direkte Bindung, Methylen, 2,2-Propyliden, -CO-, -O-, -S-, -SO- oder $-SO_2$-und $R_{14}$, $R_{15}$, $R_{16}$ und $R_{17}$ unabhängig voneinander ein Wasserstoffatom oder ein $C_3$-$C_{10}$-Alkenyl bedeuten, wobei mindestens einer der Reste $R_{14}$ bis $R_{17}$ für eine Alkenylgruppe steht, oder

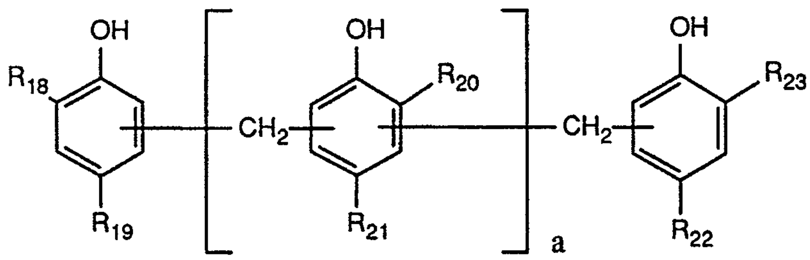

(IV)

worin $R_{18}$, $R_{19}$, $R_{20}$, $R_{21}$, $R_{22}$ und $R_{23}$ unabhängig voneinander ein Wasserstoffatom, $C_1$-$C_4$-Alkyl oder $C_3$-$C_{10}$-Alkenyl bedeuten, wobei mindestens einer der Reste $R_{18}$ bis $R_{23}$ für eine Alkenylgruppe steht, und a eine Zahl von 0 bis 10 bedeutet, und
C) Verbindungen der Formel V

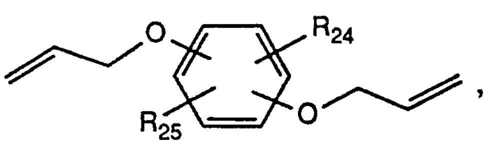

(V)

worin $R_{24}$ und $R_{25}$ gleich oder verschieden sind und jeweils Wasserstoff oder $C_1$-$C_{10}$-Alkyl bedeuten, oder der Formel VI

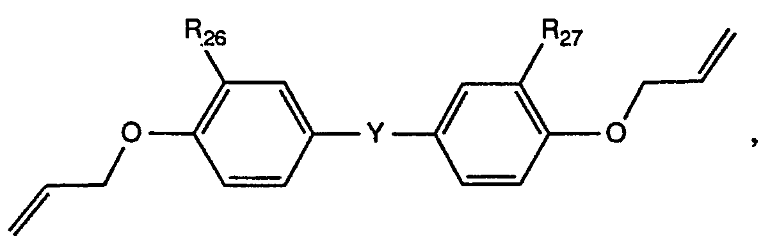

(VI)

worin $R_{26}$ und $R_{27}$ gleich oder verschieden sind und jeweils Wasserstoff oder $C_1$-$C_8$-Alkyl bedeuten und Y für eine direkte Bindung, Methylen, 2,2-Propyliden, -O-, -S-, -SO-, $-SO_2$-oder -CO- steht, zeichnen sich durch eine gute Lagerstabilität, günstige Verarbeitbarkeit und hohe Glasumwandlungstemperaturen aus.

Die vorliegende Erfindung betrifft Zusammensetzungen enthaltend Bismaleinimide, Alkenylphenole und Phenol-diallylether sowie Verfahren zur Herstellung gehärteter Produkte unter Verwendung der erfindungsgemässen Zusammensetzungen.

Allgemein bekannt sind dem Fachmann Zusammensetzungen auf der Basis von Bismaleinimiden und Alkenylphenolen. Als grundlegende Beispiele für solche Bismaleinimidsysteme sind das US-Patent 4,100,140 und das US-Patent 4,288,583 anzuführen. Ebenfalls sind Zusammensetzungen auf der Basis von Bismaleinimiden und Allylphenolethern aus der US-PS 4,853,449 bekannt. Diese aufgeführten härtbaren Gemische genügen jedoch nicht in jeder Hinsicht den hohen Anforderungen, zum Beispiel an die Verarbeitbarkeit, da sie im allgemeinen selbst bei der Verarbeitungstemperatur hochviskose Gemische darstellen. Ausserdem neigen die Bismaleinimide dazu, in solchen Systemen auszukristallisieren. So ist beispielsweise Bisphenol-A-diallylether für Bismaleinimide ein schlechtes Lösungsmittel, so dass Mischungen davon nicht sehr stabil sind und die Bismaleinimide wieder auskristallisieren.

Es wurde nun überraschend gefunden, dass mit Phenol-diallylethern modifizierte Zusammensetzungen aus Bismaleinimiden und Alkenylphenolen eine signifikant tiefere Systemviskosität aufweisen, was für die Verarbeitung von Vorteil ist. Solche Zusammensetzungen weisen bei erhöhter Temperatur längere, also günstigere Verarbeitungszeiten (pot life) auf. Es wurde ferner gefunden, dass die Zusammensetzungen bei der Verarbeitungstemperatur (80-160 °C) wie auch bei Raumtemperatur stabil sind, d.h. das Bismaleinimid kristallisiert nicht aus.

Gegenstand der vorliegenden Erfindung sind somit Zusammensetzungen enthaltend

A) Verbindungen der Formel I

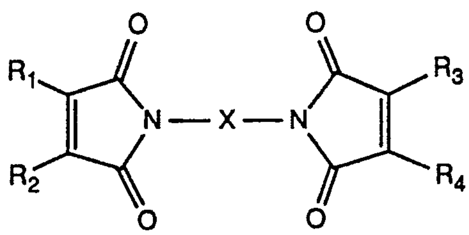

, (I)

worin $R_1$, $R_2$, $R_3$ und $R_4$ gleich oder verschieden sind und jeweils Wasserstoff oder Methyl bedeuten und X einen zweiwertigen organischen Rest mit 2 bis 60 C-Atomen darstellt,

B) Verbindungen der Formeln II, III oder IV

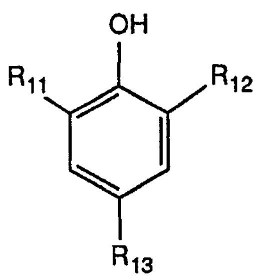

, (II)

worin $R_{11}$, $R_{12}$ und $R_{13}$ unabhängig voneinander ein Wasserstoffatom oder ein $C_3$-$C_{10}$-Alkenyl bedeuten, wobei mindestens einer der Reste $R_{11}$ bis $R_{13}$ für eine Alkenylgruppe steht,

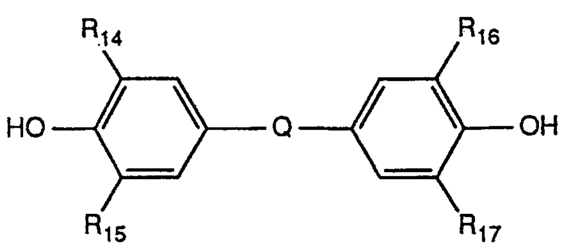

, (III)

worin Q eine direkte Bindung, Methylen, 2,2-Propyliden, -CO-, -O-, -S-, -SO- oder $-SO_2-$und $R_{14}$, $R_{15}$, $R_{16}$ und $R_{17}$ unabhängig voneinander ein Wasserstoffatom oder ein $C_3$-$C_{10}$-Alkenyl bedeuten, wobei mindestens einer der Reste $R_{14}$ bis $R_{17}$ für eine Alkenylgruppe steht, oder

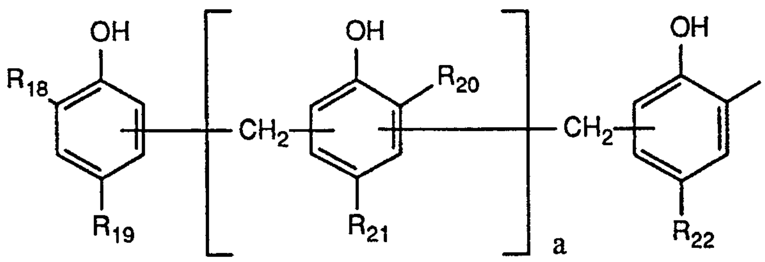

, (IV)

worin $R_{18}$, $R_{19}$, $R_{20}$, $R_{21}$, $R_{22}$ und $R_{23}$ unabhängig voneinander ein Wasserstoffatom, $C_1$-$C_4$-Alkyl oder $C_3$-$C_{10}$-Alkenyl bedeuten, wobei mindestens einer der Reste $R_{18}$ bis $R_{23}$ für eine Alkenylgruppe steht, und a eine Zahl von 0 bis 10 bedeutet, und

C) Verbindungen der Formel V

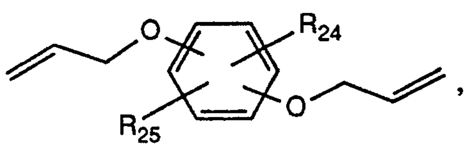

, (V)

worin $R_{24}$ und $R_{25}$ gleich oder verschieden sind und jeweils Wasserstoff oder $C_1$-$C_{10}$-Alkyl bedeuten, oder der Formel VI

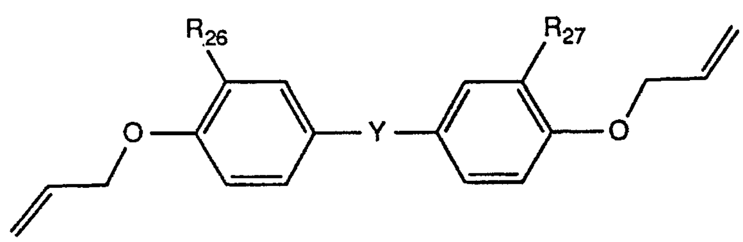

, (VI)

worin $R_{26}$ und $R_{27}$ gleich oder verschieden sind und jeweils Wasserstoff oder $C_1$-$C_8$-Alkyl bedeuten und Y für eine direkte Bindung, Methylen, 2,2-Propyliden, -O-, -S-, -SO-, $-SO_2-$oder -CO- steht.

Die Bismaleinimide der Formel I sind bekannte Verbindungen und sind beispielsweise in der US-PS 4,100,140 beschrieben. Vorzugsweise handelt es sich um Verbindungen der Formel I, worin X $-(CH_2)_p-$ mit p = 2-20, Phenylen, Xylylen, Naphthylen, Cyclopentylen, 1,5,5-Trimethylcyclohexylen-1,3; Cyclohexylen-1,4; 1,4-Bis(methylen)cyclohexylen, den Rest des 4,4'-Bicyclohexylmethans oder eine Gruppe der Formel VII

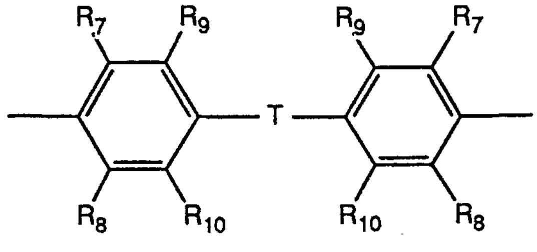

(VII)

bedeutet, worin $R_7$ und $R_8$ gleich oder verschieden sind und jeweils Wasserstoff oder $C_1$-$C_4$-Alkyl bedeuten, $R_9$ und $R_{10}$ unabhängig voneinander je für ein Wasserstoff- oder Halogenatom stehen und T Methylen, 2,2-Propyliden, -CO-, -O-, -S- oder -$SO_2$- darstellt. Ausserdem bevorzugt sind Verbindungen der Formel I, worin $R_1$, $R_2$, $R_3$ und $R_4$ Wasserstoff sind.

Besonders bevorzugt sind Verbindungen der Formel I, worin X Hexamethylen, Trimethylhexamethylen, 1,5,5-Trimethylcyclohexylen-1,3; der Rest des 4,4'-Bicyclohexylmethans oder eine Gruppe der Formel VII ist, wobei T Methylen, 2,2-Propyliden, -O- oder -S- ist.

Insbesondere verwendet man Verbindungen der Formel I, worin $R_1$, $R_2$, $R_3$ und $R_4$ Wasserstoff sind und X eine Gruppe der Formel VII darstellt, wobei $R_7$ und $R_8$ gleich oder verschieden sind und jeweils Wasserstoff, Methyl oder Ethyl bedeuten, $R_9$ und $R_{10}$ Wasserstoff sind und T Methylen ist.

Natürlich können auch Mischungen von zwei oder mehr verschiedenen Bismaleinimiden zum Einsatz kommen. Bevorzugt sind Mischungen des N,N'-4,4'-Diphenylmethan-bismaleinimid mit Verbindungen der Formel I, worin $R_1$, $R_2$, $R_3$ und $R_4$ Wasserstoff sind und X eine Gruppe der Formel VII darstellt, wobei $R_7$ und $R_8$ gleich oder verschieden sind und jeweils Methyl oder Ethyl bedeuten, $R_9$ und $R_{10}$ Wasserstoff sind und T Methylen ist. Das Molverhältnis der unsubstituierten zu den substituierten Bismaleinimide liegt hierbei vorzugsweise von 1 : 0,9 bis 1,1.

Beispiele für Bismaleinimide der Formel I sind: N,N'-Ethylen-bismaleinimid, N,N'-Hexamethylen-bismaleinimid, N,N'-Trimethylhexylen-bismaleinimid, N,N'-m-Phenylen-bismaleinimid, N,N'-4,4'-Diphenylmethan-bismaleinimid, N,N'-4,4'-Diphenylether-bismaleinimid, N,N'-(1,5,5-Trimethylcyclohexylen-1,3)-bismaleinimid, N,N'-4,4'-Dicyclohexylmethan-bismaleinimid, N,N'-p-Xylylen-bismaleinimid,N,N'-4,4'-Di-(2-ethyl-6-methylphenyl)-methan-bismaleinimid, N,N'-4,4'-Di-(2,6-dimethylphenyl)-methan-bismaleinimid, N,N'-4,4'-Di-(2,6-diethylphenyl)-methanbismaleinimid, N,N'-4,4'-Di-(2,6-diisopropylphenyl)-methan-bismaleinimid, N,N'-4,4'-Di-(2-ethyl-6-isopropylphenyl)-methan-bismaleinimid, N,N'-4,4'-Di-(3-chlor-2,6-diethylphenyl)-methan-bismaleinimid.

Die Herstellung der Verbindungen gemäss Formel I ist bekannt und erfolgt beispielsweise durch Umsetzung des gegebenenfalls substituierten Maleinsäureanhydrids mit den entsprechenden Diaminen. Übliche Methoden sind in der US-PS 3,010,290 oder der GB-PS 1,137,592 beschrieben.

Die Alkenylphenole der Formeln II bis IV sind ebenfalls bekannte Verbindungen, die beispielsweise in der US-PS 4,100,140 und der US-PS 4,288,583 beschrieben sind. Als Alkenylgruppe enthalten die Verbindungen der Formeln II bis IV vorzugsweise ein Allyl, Methallyl oder 1-Propenyl.

Von den Verbindungen der Formeln II bis IV werden in den erfindungsgemässen Zusammensetzungen bevorzugt Verbindungen der Formel III eingesetzt, worin Q für Methylen, 2,2-Propyliden, -O-, -S-, -CO- oder -$SO_2$- steht, $R_{14}$ und $R_{16}$ je ein Allyl und $R_{15}$ und $R_{17}$ je ein Wasserstoffatom bedeuten.

Besonders bevorzugt sind Alkenylphenole der Formel III, worin Q für 2,2-Propyliden steht, $R_{14}$ und $R_{16}$ je ein Allyl und $R_{15}$ und $R_{17}$ je ein Wasserstoffatom bedeuten.

Beispiele für alkenylsubstituierte Phenole und Polyole sind beispielsweise o,o'-Diallylbisphenol A, 4,4'-Dihydroxy-3,3,-diallylbiphenyl, Bis-(4-hydroxy-3-allylphenyl)methan, 2,2-Bis-(4-hydroxy-3,5-diallylphenyl)-propan, Eugenol (4-Allyl-2-methoxyphenol), o,o'-Dimethallylbisphenol A, 4,4'-Dihydroxy-3,3'-dimethallylbiphenyl, Bis-(4-hydroxy-3-methallylphenyl)methan, 2,2-Bis-(4-hydroxy-3,5-dimethallylphenyl)propan und 4-Methallyl-2-methoxyphenol.

Die Herstellung der Alkenylphenole ist bekannt und erfolgt beispielsweise durch Umsetzung der entsprechenden Phenole und z.B. Allylchlorid in Anwesenheit eines Alkalimetallhydroxids in einem geeigneten Lösungsmittel, wobei die erhaltenen Produkte anschliessend einer Claisenumlagerung unterworfen werden. Methoden dieser Art sind z.B. in der US-PS 4,100,140 und der US-PS 4,288,583 beschrieben.

Die Phenol-diallylether der Formeln V und VI sind ebenfalls bekannte Verbindungen, die beispielsweise in der US-PS 4,853,449 beschrieben sind. Bevorzugt sind Verbindungen der Formel VI, worin $R_{26}$ und $R_{27}$ gleich oder verschieden sind und jeweils Wasserstoff, Methyl oder Ethyl bedeuten, und Y für eine direkte Bindung, Methylen, 2,2-Propyliden, -O-, -S-, -SO-, -$SO_2$- oder -CO- steht.

Besonders bevorzugt ist eine Verbindung der Formel VI, worin $R_{26}$ und $R_{27}$ für Wasserstoff stehen, und Y 2,2-Propyliden bedeutet.

Die Herstellung der Phenol-diallylether ist bekannt und erfolgt beispielsweise durch Umsetzung der entsprechenden Phenole und z.B. Allylchlorid in Anwesenheit eines Alkalimetallhydroxids oder -carbonats in einem geeigneten Lösungsmittel. Methoden dieser Art sind z.B. in der US-PS 4,853,449 beschrieben.

Im allgemeinen enthalten die erfindungsgemässen Zusammensetzungen pro Mol der Komponente A 0,4 bis 1,5 Mol, vorzugsweise 0,5 bis 1,2 Mol, der Komponenten B und C.

Weiterhin enthalten die erfindungsgemässen Zusammensetzungen im allgemeinen pro Mol Komponente B 0,1 bis 4 Mol der Komponente C.

Die erfindungsgemässen Zusammensetzungen können durch blosses Zusammenmischen der Komponenten oder durch Erhitzen der Zusammensetzung auf 75 bis 160 °C während etwa 10 bis 60 Minuten hergestellt werden. Um die Umsetzung zu erleichtern, können auch gegebenenfalls Lösungsmittel, besonders flüchtige Lösungsmittel, wie chlorierte Kohlenwasserstoffe, Ester, Etheralkohole oder Tetrahydrofuran eingesetzt werden. Das Lösungsmittel wird nach der Umsetzung entfernt.

Die Härtung der erfindungsgemässen Zusammensetzungen erfolgt im allgemeinen bei Temperaturen zwischen 100 und 300 °C während einer für die Härtung ausreichenden Zeit.

Während der Härtung entsteht ein Netzwerk mit hoher Vernetzungdichte. Der hier verwendete Ausdruck Härtung bedeutet daher die Umwandlung der niederviskosen Harzmischungen in unlösliche und nichtschmelzbare vernetzte Produkte. Es können so Hochleistungswerkstoffe hergestellt werden, wie z.B. faserverstärkte Verbundwerkstoffe, Strukturklebstoffe, Laminier- oder Elektroharze, die hohen Temperaturen ausgesetzt werden können.

Die erfindungsgemässen Zusammensetzung können in jeder Verarbeitungsphase vor der Härtung mit den üblichen Modifizierungsmitteln vermischt werden, wie z.B. Streckmittel, Füllstoffe und Verstärkungsmittel, Pigmente, Farbstoffe, organische Lösungsmittel, Plastifizierungsmittel, Mittel zur Verbesserung der Trockenklebrigkeit (Klebrigmacher), Gummis oder Beschleuniger. Als Streckmittel, Verstärkungsmittel, Füllstoffe und Pigmente kommen z.B. in Frage: Kohleteer, Bitumen, Glasfasern, Borfasern, Kohlefasern, Cellulose, Polyethylenpulver, Polypropylenpulver, Glimmer, Asbest, Quarzpulver, Gips, Antimontrioxid, Bentone, Siliziumdioxidaerogel ("Aerosil"), Lithopon, Barit, Titandioxid, Russ, Graphit, Eisenoxid oder Metallpulver wie z.B. Aluminium- oder Eisenpulver. Die härtbaren Gemische können auch andere übliche Zusätze, wie z.B. Flammschutzmittel, Thixotropiemittel, Verlaufsmittel wie Silicone, Celluloseacetatbutyrat, Polyvinylbutyrat, Wachse, Stearate und ähnliches (welche zum Teil auch als Formtrennmittel verwendet werden) beigegeben werden.

Die härtbaren Zusammensetzungen können auf übliche Art unter Verwendung bekannter Mischaggregate, wie Rührer, Kneter, Walzkörper und ähnliches, herstellt werden.

Die erfindungsgemässen Zusammensetzungen zeichnen sich durch eine sehr gute Verarbeitbarkeit, gute Löslichkeit in üblichen organischen Lösungsmitteln, gute Stabilität in der Schmelze oder in Lösung sowie durch gute thermische und mechanische Eigenschaften der gehärteten Produkte aus. Die erhaltenen Produkte weisen ebenfalls gute elektrische Eigenschaften auf, haben hohe Glasumwandlungstemperaturen und sind nicht brüchig. Die erfindungsgemässen Zusammensetzungen können auch problemlos als Schmelze, z.B. für die Imprägnierung, verwendet werden.

Gegenstand der vorliegenden Erfindung ist daher auch ein Verfahren zur Herstellung gehärteter Produkte unter Verwendung der erfindungsgemässen Zusammensetzungen.

Die beschriebenen erfindungsgemässen Zusammensetzungen können auf verschiedenen Gebieten eingesetzt werden, wie z.B. in Prepregs, Laminaten, Verbundwerkstoffen, Leiterplatten, Giesslingen, Formkörpern, Klebstoffen und Überzügen. Von besonderem Interesse ist ihre Anwendung für die Herstellung von faserverstärkten Verbundwerkstoffen, welche in der Luftfahrtindustrie sehr wichtig sind. So können die modifizierten Harze zum Präimprägnieren von verschiedenem faserartigem Material verwendet werden, welches als Deckschicht für Honigwabenstrukturen oder als Strukturteile eingesetzt wird. Verfahren zur Herstellung von Prepregs sind dem Fachmann bekannt. Als faserartige Materialien können z.B. Graphit, Glas und Kevlar verwendet werden. Auch Verfahren zur Herstellung von Laminaten sind bekannt. Laminate verschiedener Dicke können z.B. durch Pressformen oder Autoklavformen hergestellt werden. Die erfindungsgemässen Gemische können auch erfolgreich als haftvermittelnde Substanzen eingesetzt werden.

In den folgenden Beispielen sind einige bevorzugte Ausführungsformen der vorliegenden Erfindung beschrieben.

Beispiel 1:

25 g o,o'-Diallylbisphenol-A und 12,5 g Bisphenol-A-diallylether werden auf 150 °C erhitzt. Anschliessend werden unter Rühren 50 g N,N'-4,4'-Diphenylmethan-bismaleinimid zugegeben und die Mischung bei 125-130 °C während 15 min weiter gerührt. Ein Teil der Mischung wird unter Vakuum entgast und in eine 180 °C warme Aluminiumform (4 mm) gegossen und 1 Stunde bei 180 °C, 2 Stunden bei 200 °C und 6 Stunden bei 250 °C ausgehärtet. Der Rest wird für DSC und Viskositätsmessungen verwendet. Es werden folgende Eigenschaften gemessen:

| | |
|---|---|
| Viskosität $\eta_{100}$: | 196 mPa•s |
| $T_{max}$ DSC: | 260 °C |
| $T_g$ (TMA): | 311 °C |
| Biegefestigkeit (nach ISO 178): | 169 MPa |
| Bruchdehnung: | 5,6 % |

Beispiel 2:

Eine Mischung aus 25 g N,N'-4,4'-Diphenylmethan-bismaleinimid und 25 g N,N'-4,4'-Di-(2-ethyl-6-methylphenyl)-methan-bismaleinimid wird zu einer 100 °C warmen Mischung von 22,5 g o,o'-Diallylbisphenol-A und 11,5 g Bisphenol-A-diallylether gegeben und 15 min bei 100 °C gerührt. Anschliessend wird wie in Beispiel 1 in einer Aluminiumform ausgehärtet und der Rest für DSC und Viskositätsmessungen verwendet. Es werden folgende Eigenschaften gemessen:

| | |
|---|---|
| Viskosität $\eta_{100}$: | 345 mPa•s |
| $T_{max}$ DSC: | 265 °C |
| $T_g$ (TMA): | 298 °C |
| Biegefestigkeit (nach ISO 178): | 173 MPa |
| Bruchdehnung: | 8,6 % |

Beispiel 3:

Zu einer 150 °C warmen Mischung von 10 g Bisphenol-A-diallylether und 20,5 g o,o'-Diallylbisphenol-A werden 50 g N,N'-4,4'-Di-(2-ethyl-6-methylphenyl)-methan-bismaleinimid zugegeben und bei 125 °C gerührt. Ein Teil der Mischung wird unter Vakuum entgast und in eine 200 °C warme Aluminiumform (4 mm) gegossen und 1 Stunde bei 200 °C, 2 Stunden bei 220 °C und 6 Stunden bei 270 °C ausgehärtet. Der Rest wird für DSC und Viskositätsmessungen verwendet. Es werden folgende Eigenschaften gemessen:

| | |
|---|---|
| Viskosität $\eta_{100}$: | 300 mPa•s |
| $T_{max}$ DSC: | 277 °C |
| $T_g$ (TMA): | 302 °C |
| Biegefestigkeit (nach ISO 178): | 145 MPa |
| Bruchdehnung: | 5,5 % |

Beispiel 4:

25 g o,o'-Diallylbisphenol-A, 25 g Bisphenol-A-diallylether und 16,5 g 2,4-Diallyl-6-methoxyphenol werden auf 150 °C erhitzt. Anschliessend werden unter Rühren 100 g N,N'-4,4'-Diphenylmethan-bismaleinimid zugegeben und die Mischung bei 125-130 °C während 15 min weiter gerührt. Ein Teil der Mischung wird unter Vakuum entgast und in eine 180 °C warme Aluminiumform (4 mm) gegossen und 1 Stunde bei 180 °C, 2 Stunden bei 200 °C und 6 Stunden bei 250 °C ausgehärtet. Der Rest wird für DSC und Viskositätsmessungen verwendet. Es werden folgende Eigenschaften gemessen:

| | |
|---|---|
| Viskosität $\eta$100: | 90 mPa•s |
| $T_{max}$ DSC: | 261 °C |
| $T_g$ (TMA): | 350 °C |
| Biegefestigkeit (nach ISO 178): | 150 MPa |
| Bruchdehnung: | 4,7 % |

Beispiel 5:

37,5 g o,o'-Diallylbisphenol-A und 34 g Bisphenol-F-diallylether werden auf 150 °C erhitzt. Anschliessend werden unter Rühren 100 g N,N'-4,4'-Diphenylmethan-bismaleinimid zugegeben und die Mischung bei 125-130 °C während 15 min weiter gerührt. Ein Teil der Mischung wird unter Vakuum entgast und in eine 180 °C warme Aluminiumform (4 mm) gegossen und 1 Stunde bei 180 °C, 2 Stunden bei 200 °C und 6 Stunden bei 250 °C ausgehärtet. Der Rest wird für DSC-Messungen verwendet. Es werden folgende Eigenschaften gemessen:

| | |
|---|---|
| $T_{max}$ DSC: | 260 °C |
| $T_g$ (TMA): | 338 °C |
| Biegefestigkeit (nach ISO 178): | 150 MPa |
| Bruchdehnung: | 4,5 % |

**Patentansprüche**

**1.** Zusammensetzungen enthaltend

A) Verbindungen der Formel I

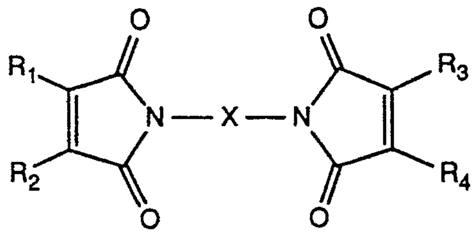

, (I)

worin $R_1$, $R_2$, $R_3$ und $R_4$ gleich oder verschieden sind und jeweils Wasserstoff oder Methyl bedeuten und X einen zweiwertigen organischen Rest mit 2 bis 60 C-Atomen darstellt,
B) Verbindungen der Formeln II, III oder IV

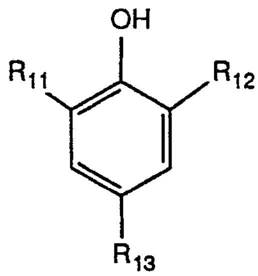

, (II)

worin $R_{11}$, $R_{12}$ und $R_{13}$ unabhängig voneinander ein Wasserstoffatom oder ein $C_3$-$C_{10}$-Alkenyl bedeuten, wobei mindestens einer der Reste $R_{11}$ bis $R_{13}$ für eine Alkenylgruppe steht,

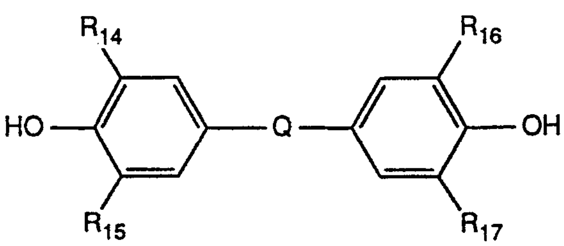

, (III)

worin Q eine direkte Bindung, Methylen, 2,2-Propyliden, -CO-, -O-, -S-, -SO- oder $-SO_2$-und $R_{14}$, $R_{15}$, $R_{16}$ und $R_{17}$ unabhängig voneinander ein Wasserstoffatom oder ein $C_3$-$C_{10}$-Alkenyl bedeuten, wobei mindestens einer der Reste $R_{14}$ bis $R_{17}$ für eine Alkenylgruppe steht, oder

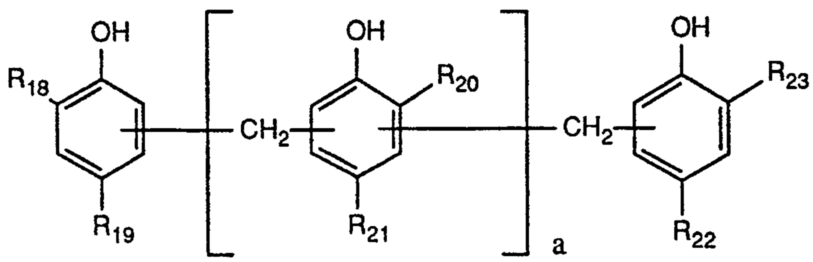

, (IV)

worin $R_{18}$, $R_{19}$, $R_{20}$, $R_{21}$, $R_{22}$ und $R_{23}$ unabhängig voneinander ein Wasserstoffatom, $C_1$-$C_4$-Alkyl oder $C_3$-$C_{10}$-Alkenyl bedeuten, wobei mindestens einer der Reste $R_{18}$ bis $R_{23}$ für eine Alkenylgruppe steht, und a eine Zahl von 0 bis 10 bedeutet, und
C) Verbindungen der Formel V

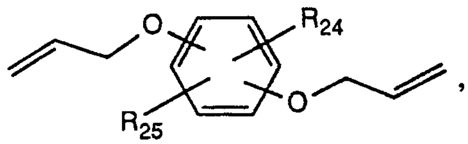

(V)

worin $R_{24}$ und $R_{25}$ gleich oder verschieden sind und jeweils Wasserstoff oder $C_1$-$C_{10}$-Alkyl bedeuten, oder der Formel VI

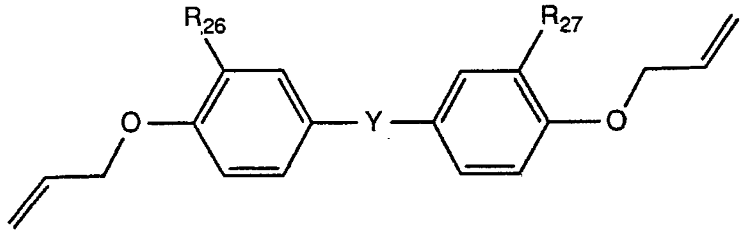

, (VI)

worin $R_{26}$ und $R_{27}$ gleich oder verschieden sind und jeweils Wasserstoff oder $C_1$-$C_8$-Alkyl bedeuten und Y für eine direkte Bindung, Methylen, 2,2-Propyliden, -O-, -S-, -SO-, $-SO_2-$oder -CO- steht.

2. Zusammensetzungen gemäss Anspruch 1 enthaltend Verbindungen der Formel I, worin X $-(CH_2)_p-$ mit p = 2-20, Phenylen, Xylylen, Naphthylen, Cyclopentylen, 1,5,5-Trimethylcyclohexylen-1,3; Cyclohexylen-1,4; 1,4-Bis(methylen)cyclohexylen, den Rest des 4,4'-Bicyclohexylmethans oder eine Gruppe der Formel VII

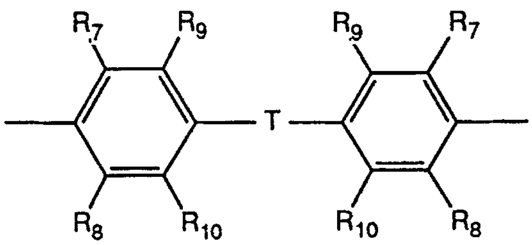

(VII)

bedeutet, worin $R_7$ und $R_8$ gleich oder verschieden sind und jeweils Wasserstoff oder $C_1$-$C_4$-Alkyl bedeuten, $R_9$ und $R_{10}$ unabhängig voneinander je für ein Wasserstoff- oder Halogenatom stehen und T Methylen, 2,2-Propyliden, -CO-, -O-, -S- oder $-SO_2-$ darstellt.

3. Zusammensetzungen gemäss Anspruch 1 enthaltend Verbindungen der Formel I, worin $R_1$, $R_2$, $R_3$ und $R_4$ Wasserstoff sind.

4. Zusammensetzungen gemäss Anspruch 1 enthaltend Verbindungen der Formel I, worin X Hexamethylen, Trimethylhexamethylen, 1,5,5-Trimethylcyclohexylen-1,3; der Rest des 4,4'-Bicyclohexylmethans oder eine Gruppe der Formel VII ist, wobei T Methylen, 2,2-Propyliden, -O- oder -S- ist.

5. Zusammensetzungen gemäss Anspruch 1 enthaltend Verbindungen der Formel I, worin $R_1$, $R_2$, $R_3$ und $R_4$ Wasserstoff sind und X eine Gruppe der Formel VII darstellt, wobei $R_7$ und $R_8$ gleich oder verschieden sind und jeweils Wasserstoff, Methyl oder Ethyl bedeuten, $R_9$ und $R_{10}$ Wasserstoff sind und T Methylen ist.

6. Zusammensetzungen gemäss Anspruch 1, worin in den Formeln II bis IV die Alkenylgruppe ein Allyl, Methallyl oder 1-Propenyl ist.

7. Zusammensetzungen gemäss Anspruch 1, enthaltend eine Verbindung der Formel III, worin Q für Methylen, 2,2-Propyliden, -O-, -S-, -CO- oder $-SO_2-$ steht, $R_{14}$ und $R_{16}$ je ein Allyl und $R_{15}$ und $R_{17}$ je

ein Wasserstoffatom bedeuten.

8. Zusammensetzungen gemäss Anspruch 1, enthaltend eine Verbindung der Formel III, worin Q für 2,2-Propyliden steht, $R_{14}$ und $R_{16}$ je ein Allyl und $R_{15}$ und $R_{17}$ je ein Wasserstoffatom bedeuten.

9. Zusammensetzungen gemäss Anspruch 1 enthaltend eine Verbindung der Formel VI, worin $R_{26}$ und $R_{27}$ gleich oder verschieden sind und jeweils Wasserstoff, Methyl oder Ethyl bedeuten, und Y für eine direkte Bindung, Methylen, 2,2-Propyliden, -O-, -S-, -SO-, $-SO_2-$ oder -CO- steht.

10. Zusammensetzungen gemäss Anspruch 1 enthaltend eine Verbindung der Formel VI, worin $R_{26}$ und $R_{27}$ für Wasserstoff stehen, und Y 2,2-Propyliden bedeutet.

11. Zusammensetzungen gemäss Anspruch 1, worin pro Mol der Komponente A 0,4 bis 1,5 Mol, vorzugsweise 0,5 bis 1,2 Mol, der Komponenten B und C enthalten sind.

12. Zusammensetzungen gemäss Anspruch 1, worin pro Mol der Komponente B 0,1 bis 4 Mol der Komponente C enthalten sind.

13. Verfahren zur Herstellung gehärteter Produkte unter Verwendung der Zusammensetzungen gemäss Anspruch 1.

Europäisches Patentamt

# EUROPÄISCHER RECHERCHENBERICHT

Nummer der Anmeldung

**EP 91 10 8135**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 298 720 (N.YAMAZAKI ET AL.)<br>– – – | 1 | C 08 G 73/12<br>C 08 F 222/40 |
| A | US-A-4 752 641 (T.KOYAMA ET AL.)<br>– – – – – | 1 | |
| | | | **RECHERCHIERTE SACHGEBIETE (Int. Cl.5)** |
| | | | C 08 F<br>C 08 G |

Der vorliegende Recherchenbericht wurde für alle Patentansprüche erstellt

| Recherchenort | Abschlußdatum der Recherche | Prüfer |
|---|---|---|
| Den Haag | 03 September 91 | GLIKMAN J-F.M. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument